Europäisches Patentamt

European Patent Office

Office européen des brevets

(19)

(11) Publication number: **0 082 026**
**B1**

(12) **EUROPEAN PATENT SPECIFICATION**

(45) Date of publication of patent specification: **16.09.87**

(21) Application number: **82306735.0**

(22) Date of filing: **16.12.82**

(51) Int. Cl.⁴: **B 29 D 11/00,** D 06 P 1/90,
D 06 P 3/00

(54) A process for producing coloured shaped articles.

(30) Priority: **16.12.81 JP 201450/81**

(43) Date of publication of application:
**22.06.83 Bulletin 83/25**

(45) Publication of the grant of the patent:
**16.09.87 Bulletin 87/38**

(84) Designated Contracting States:
**DE FR GB**

(56) References cited:
**EP-A-0 003 191**
**EP-A-0 030 577**
**FR-E- 66 190**
**GB-A- 539 673**
**GB-A- 575 912**
**GB-A-2 006 114**
**US-A-4 303 701**
**AMERICAN JOURNAL OF OPTOMETRY &
PHYSIOLOGICAL OPTICS, vol. 54, no. 3, March
1977, pages 160-164; P.C. NEWCOMER et al.:
"Methods of tinting soflens (R) contact lenses"
R. Vieweg and F. Esser, Kunststoff-Handbuch,
Band IX, Polymethacrylate, C. Hanser Verlag,
München (1975), p. 504+593**

(73) Proprietor: **JAPAN SYNTHETIC RUBBER CO.,
LTD.**
**11-24, Tsukiji-2-chome Chuo-ku**
**Tokyo 104 (JP)**
(73) Proprietor: **Ricky Contact Lens Research
Institute Inc.**
**7, Yotsuya-3-chome**
**Shinjuku Tokyo (JP)**

(72) Inventor: **Suminoe, Taro**
**25-17, Komaba-1-chome, Meguro-ku**
**Tokyo (JP)**
Inventor: **Ito, Tetsuo**
**13-3, Naruse-1-chome**
**Machida-shi (JP)**
Inventor: **Kiyomatsu, Yasuhiro**
**Ibarakihaitsu 403 2-13, Hachiman, 4-chome**
**Sendai-shi Miyagi-ken (JP)**
Inventor: **Shimizu, Takao**
**32-13, Shimotoda-2-chome**
**Toda-shi (JP)**

(74) Representative: **Tubby, David George et al**
**MARKS & CLERK 57-60 Lincoln's Inn Fields**
**London WC2A 3LS (GB)**

**Description**

This invention relates to a process for producing coloured shaped articles, which may be applied with excellent results to the production of coloured contact lenses.

Contact lenses are used for correcting poor eyesight. The lenses usually on the market are colourless and transparent. However, coloured contact lenses are sometimes desired for various reasons, including: the correction of colour blindness; facial beauty; as sun shields; and to protect eyes against ultraviolet light.

In order to satisfy these requirements, it has been proposed to produce coloured contact lenses by dissolving or dispersing a dye or a pigment in a monomer and then polymerizing the monomer, or by printing or coating a coloured layer onto the surface of a contact lens.

Methods of colouring polymeric articles are disclosed in Kunststoff Handbuch Vol. IX, pp 504, 593 (1975), EP—A 30 577, GB—A 539 673 and US—A 4 303 701.

However, contact lenses obtained by these methods tend to undergo discolouration or fading owing to oozing-out of the dye while they are used. Water-absorbent soft contact lenses are particularly susceptible to loss of dye in this way as the dye oozes out during sterilization of the lenses by boiling or with a cold sterilizing solution, so that the lenses tend to discolour.

We have now discovered a process for producing a uniformly coloured shaped article which undergoes neither discolouration nor fading due to oozing-out of the dye whilst it is being used.

According to this invention, there is provided a process for producing a coloured shaped article, by immersing a shaped article formed of a polymer in a solution of a dye, characterized in that an article made of a copolymer of at least one monomer which is an acrylate and/or methacrylate and at least one polyfunctional monomer which is a polyfunctional acrylate and/or methacrylate, the proportion of said polyfunctional monomer being from 0.1 to 50 mole% of the total of said acrylate, methacrylate and polyfunctional monomer, is immersed in a dyeing solution prepared by dissolving a water-soluble dye in a solvent capable of swelling said polymer or in a mixture of 100 parts by weight of said solvent and up to 20 parts by weight of water, to swell and colour the shaped article, and then drying the swollen shaped article.

The process for colouring a shaped article of this invention has the advantage that the discolouration or fading due to oozing-out of the dye from the shaped article is prevented by uniformly penetrating and dispersing a water-soluble dye into a swollen lipophilic polymer. In particular, since coloured contact lenses obtained by this invention are substantially non-hydrous, even if they are repeatedly subjected to such treatment as sterilization by boiling or with a cold sterilizing solution, the dye is not extracted although, unlike water-absorbent soft contact lenses, they do not require this sterilization. Therefore, the lenses are not discoloured.

Suitable acrylates and/or methacrylates, which are one of the monomeric components of the copolymer used as the base material for the shaped article in this invention include such acrylates as methyl acrylate, ethyl acrylate, propyl acrylate, isopropyl acrylate, butyl acrylate, isobutyl acrylate, t-butyl acrylate, 2-ethylhexyl acrylate and octyl acrylate, and such methacrylates as methyl methacrylate, ethyl methacrylate, propyl methacrylate, isopropyl methacrylate, butyl methacrylate, isobutyl methacrylate, t-butyl methacrylate, 2-ethylhexyl methacrylate, n-hexyl methacrylate and octyl methacrylate. A single one or two or more of these monomers may be used.

The polymer is a crosslinked polymer prepared by copolymerizing a polyfunctional monomer with the above-mentioned monomer or monomers in order to improve the mechanical strength of the shaped article and to help it keep its desired dimensions and form. The polyfunctional monomer is a polyfunctional acrylate or methacrylate, for example: glycol diacrylates of olefins or polyolefins such as ethylene glycol diacrylate, diethylene glycol diacrylate or triethylene glycol diacrylate; glycol dimethacrylates of olefins or polyolefins such as ethylene glycol dimethacrylate, diethylene glycol dimethacrylate or triethylene glycol dimethacrylate; trimethylolpropane trimethacrylate; allyl acrylate; and vinyl-substituted benzyl acrylates. A single one or two or more of these polyfunctional monomers may be used. The amount of these polyfunctional monomers copolymerized is from 0.1 to 50 mole%, preferably from 0.5 to 10 mole%, based on the total amount of the acrylates, methacrylates and polyfunctional monomers. If the amount is less than 0.1 mole%, the resulting shaped article does not have sufficiently improved mechanical strength and is not sufficiently dimension-stablized. On the other hand, if the amount exceeds 50 mole%, the swelling of the shaped article is insufficient when it is immersed in the dyeing solution, so that the shaped article becomes difficult to colour uniformly to the inside.

Methods of shaping a polymer as a base material into a shaped article having the desired form include, for example, polymerizing the above-mentioned monomers in a mould to give a polymer block and then shaping the polymer block to the desired form (such as a contact lens) by cutting, or polymerizing the above-mentioned monomers in a mould having the desired form (such as a contact lens).

The polymerization of the monomers can be effected by heating or by irradiation with light, such as ultraviolet light, or electron radiation, using a polymerization initiator, for example: a peroxide such as benzoyl peroxide or lauroyl peroxide; an azo compound such as azobisisobutyronitrile; or a carbonium compound such as diacetyl, benzoin or benzoin ether. Although the polymerization temperature is not critical so long as it is in such a range that the monomer to be polymerized retains a liquid state, it is

2

preferably from 10 to 50°C in order to reduce inner stresses on the shaped article produced from the resulting polymer.

In this invention, when the polymer to be used as a base material for a shaped article is a soft polymer having a low glass transition temperature and hence is difficult to subject to cutting or the like, it is, of course, possible to prepare a hard, crosslinked polymer having a high glass transition temperature by copolymerizing a polyfunctional monomer as an essential component with a monomer properly selected from the above-mentioned monomers and, if necessary, acrylic acid, methacrylic acid or the like; this polymer is then cut into the form of the desired shaped article; and it is then converted to a soft shaped article having a low glass transition temperature by subjecting the ester or carboxyl group of the polymer to ester interchange or esterification with an alcohol. This method is disclosed in U.S. 3,850,892, and a soft shaped article of precise dimensions and form can easily be obtained by this method.

The shaped article having the desired form and obtained in the manner described above is then coloured, for example as follows. First, there is prepared a dyeing solution of a water-soluble dye in a solvent capable of swelling the polymer. The shaped article is then immersed in this dyeing solution, whereby it is swollen and uniformly coloured to its inside. It is, of course, also possible to colour only the surface layer of the shaped article without allowing the dye to penetrate to the inside by restricting the immersion time.

The water-soluble dye used in this invention is soluble in water and in solvents capable of swelling the polymer to be used as the base material for the shaped article, and examples include those mentioned in the new edition of "Manual of Dyes" edited by Organic Synthetic Chemistry Society of Japan, 1970, published by Maruzene.

There may be used as the water-soluble dye, for example, acidic dyes, such as C.I. Acid Red 27 (C.I. No. 16185), C.I. Acid Red 51 (C.I. No. 45430), C.I. Acid Red 18 (C.I. No. 16255), C.I. Acid Red 87 (C.I. No. 45380), Cl. Acid Red 87 (C.I. No. 45380), C.I. Acid Red 92 (C.I. No. 45410), C.I. Acid Red 92 (C.I. No. 45410), C.I. Acid Red 94 (C.I. No. 45440), C.I. Acid Red 94 (C.I. No. 45440), C.I. Acid Red 52 (C.I. No. 45100), C.I. Acid Yellow (C.I. No. 47005), C.I. Acid Yellow 23 (C.I. No. 19140), C.I. Acid Green 5 (C.I. No. 42095), C.I. Acid Blue 9 (C.I. No. 42090), C.I. Acid Blue 74 (C.I. No. 73015), C.I. Acid Violet 49 (C.I. No. 42640), C.I. Acid Orange 11 (C.I. No. 45370), C.I. Acid Orange 11 (C.I. No. 45370), C.I. Acid Yellow 73 (C.I. No. 45350), C.I. Acid Yellow 73 (C.I. No. 45350), C.I. Acid Green 25 (C.I. No. 61570), C.I. Acid Blue 5 (C.I. No. 42052), C.I. Acid Orange 24 (C.I. No. 20170), C.I. Acid Yellow 11 (C.I. No. 18820), C.I. Acid Yellow 76 (C.I. No. 18850) C.I. Acid Orange 1 (C.I. No. 13091), C.I. Acid Orange 7 (C.I. No. 15510), C.I. Acid Red 6 (C.I. No. 14680), C.I. Acid Red 51 (C.I. No. 45430), C.I. Acid Violet 43 (C.I. No. 60730), C.I. Acid Blue 29 (C.I. No. 20460), C.I. Acid Blue 102 (C.I. No. 50320), C.I. Acid Green 3 (C.I. No. 42085), C.I. Acid Green 7, C.I. Acid Brown 13 (C.I. No. 10410), C.I. Acid Brown 46, C.I. Acid Black 2 (C.I. No. 50420), C.I. Acid Black 7 (C.I. No. 26300) and the like; basic dyes, such as C.I. Basic Violet 10 (C.I. No. 45170), C.I. Basic Yellow 1 (C.I. No. 49005), C.I. Basic Yellow 2 (C.I. No. 41000), C.I. Basic Orange 14 (C.I. No. 46005), C.I. Basic Orange 15 (C.I. No. 46045), C.I. Basic Red 1 (C.I. No. 45160), C.I. Basic Red 9 (C.I. No. 42500), C.I. Basic Violet 1 (C.I. No. 42535), C.I. Basic Violet 3 (C.I. No. 42555), C.I. Basic Blue 1 (C.I. No. 42025), C.I. Basic Blue 3 (C.I. No. 51005), C.I. Basic Blue 5 (C.I. No. 42140), C.I. Basic Green 1 (C.I. No. 42040), C.I. Basic Green 4 (C.I. No. 42000), C.I. Basic Brown 1 (C.I. No. 21000) and the like; direct dyes such as C.I. Direct Orange 26 (C.I. No. 29150), C.I. Direct Orange 29 (C.I. No. 29155), C.I. Direct Yellow 26 (C.I. No. 25300), C.I. Direct Red 23 (C.I. No. 29160), C.I. Direct Red 4 (C.I. No. 29165), C.I. Direct Yellow 8 (C.I. No. 13920), C.I. Direct Violet 98, C.I. Direct Green 33 (C.I. No. 34270), C.I. Direct Brown 44 (C.I. No. 35010), C.I. Direct Black 17 (C.I. No. 27700), C.I. Direct Black 19 (C.I. No. 35255), C.I. Direct Blue 237, C.I. Direct Green 63 and the like; vat dyes such as C.I. Vat Blue 1 (C.I. No. 73000), C.I. Vat Blue 6 (C.I. No. 69825), C.I. Vat Blue 18 (C.I. No. 59815), C.I. Solubilised Vat Blue 1 (C.I. No. 73002), C.I. Solubilised Vat Brown 1 (C.I. No. 70801) and the like. Moreover, there may also be used dyes such as C.I. Food Yellow (C.I. No. 15985), C.I. Food Green (C.I. No. 42053) and the like. Of these dyes, the acidic, basic and direct dyes are preferred in view of the ease of dyeing with them.

Examples of solvents capable of dissolving the dye used in this invention and of swelling the polymer include: lower alcohols such as methyl alcohol, ethyl alcohol or isopropyl alcohol; ketones such as acetone or methyl ethyl ketone; chlorinated hydrocarbons such as dichloromethane or chloroform; ethers such as diethyl ether, ethylene glycol monomethyl ether, ethylene glycol monobutyl ether or diethylene glycol monomethyl ether; and esters such as ethyl acetate, methyl formate, ethyl formate or butyl formate and the like. A single one of these solvents or a mixture of two or more thereof may be used.

Furthermore, if the dye cannot be dissolved by using the above-mentiomed solvents alone, it is also possible to prepare a dyeing solution by adding a small amount (i.e. up to 20 parts per 100 of solvent) of water (for example, adding water in an amount of from 1 to 20 parts by weight per 100 parts by weight of the solvent), particularly by adding, in the case of a vat dye, a small amount of an aqueous alkaline reducing solution (for example, adding, per 100 parts by weight of the solvent, from 0.5 to 10 parts by weight of an aqueous solution prepared by adding from 5 to 20 parts by weight of sodium hydroxide and from 3 to 20 parts by weight of sodium hyposulphite to 100 parts by weight of water).

In the process of this invention, a shaped article having the desired form is immersed in a dyeing solution prepared by dissolving a water-soluble dye in the above-mentioned solvent to swell the former, whereby the dye penetrates into the inside of the shaped article, after which the shaped article is taken out and then dried. Subsequently, the resulting coloured shaped article may be washed with water to remove the dye remaining attached to its surface.

The dye concentration in the dyeing solution is usually from 0.001 to 10% by weight, although it may vary depending upon the kind of dye.

The shaped article is usually immersed in the dyeing solution at a temperature of from 0 to 70°C, preferably from 15 to 50°C.

The time for which the shaped article is immersed in the dyeing solution is usually from 10 seconds to 2 hours, and it is possible to colour only a thin surface layer of the shaped article by shortening the immersion time. In particular, in the case of a hard polymer shaped article, complete swelling of the shaped article in the dyeing solution results, in some cases, in deformation of the shaped article because it cannot return to its original form owing to inner stresses even after the solvent has been removed and the article has been dried. In such a case, it is preferable to colour only the thin surface layer of the shaped article by shortening the immersion time.

Even in the case of colouration of only the thin surface layer of such a shaped article, there can be obtained a uniformly coloured shaped article free from unevenness in colour without the dye oozing out.

According to this invention, there can be obtained a shaped article which is free from unevenness in colour and is uniformly coloured and from which the dye does not ooze out. Therefore, when coloured contact lenses are produced according to this invention, contact lenses good to the eyes can be obtained, and the shaped articles undergo neither discolouration nor fading even if they are used for a long time. This is considered to be because the coloured shaped articles are not obtained by colouring, with an oil-soluble dye, a lipophilic polymer (such as a polymer of an acrylate and/or a methacrylate), but are obtained by uniformly dispersing a water-soluble dye into a lipophilic polymer, and therefore the dye is not dissolved in the polymer, and accordingly does not migrate in and ooze out of the polymer. Further, unlike water-absorbent soft contact lenses the polymer which is the base material for the shaped articles of this invention is substantially non-hydrous, and, therefore, the dye does not ooze out owing to water-absorption and swelling as is seen in water-absorbent contact lenses.

The invention is further explained below in more detail with reference to the Examples, which are merely by way of illustration and not by way of limitation.

Example 1

Into a polyethylene mould having a diameter of 15 mm and a height of 20 mm was poured a mixture of 250 g of acrylic acid, 250 g of butyl methacrylate, 20 g of ethylene glycol dimethacrylate and 6 mg of benzoin, and the mixture was irradiated with ultraviolet light under a nitrogen atmosphere at room temperature to polymerize it. The resulting polymer block was shaped into the form of a contact lens by conventional cutting. Subsequently, the lens thus obtained was immersed in propyl alcohol, and 1% by weight of methanesulfphonic acid was added thereto, after which the resulting mixture was heated at reflux for 24 hours to esterify completely the carboxyl groups in the polymer. After the reaction, the lens was washed with propyl alcohol and dried to give a soft contact lens. The soft contact lens was immersed at room temperature for 1 hour in a dyeing solution prepared by adding 100 g of methyl alcohol to 1 g of C.I. Acid Blue 9 (C.I. No. 42090). After the immersion, the swollen and colored soft contact lens was dried at 95°C for 16 hours and then washed with water to remove the dye attaching to its surface, giving a coloured contact lens.

Even when this coloured soft contact lens was boiled in distilled water for 7 days at atmospheric pressure neither discolouration nor fading occurred.

When the coloured soft contact lens was applied to an eye and used for three months for 8 hours per day, substantially no discolouration or fading occurred and the dye-retention, determined from the absorbance at 630 nm, was 97%. The term "dye-retention" used herein means the proportion of the absorbance after use to the absorbance before use.

Example 2

A contact lens obtained by polymerization and softened in the same manner as in Example 1 was immersed at room temperature for 1 hour in a dyeing solution prepared by adding 10 g of diethyl ether and 90 g of ethyl alcohol to 0.5 g of C.I. Acid Yellow 3 (C.I. No. 47005). After the immersion, the swollen and coloured soft contact lens was dried at 95°C for 16 hours and then washed with water to remove the dye attaching to its surface, to give a coloured contact lens.

Even when this coloured soft contact lens was boiled in distilled water for 7 days at atmospheric pressure, neither discolouration nor fading occurred.

When the coloured soft contact lens was applied to an eye and used for three months for 8 hours per day, substantially no discolouration or fading was observed, and the dye-retention, determined from the absorbance at 390 nm, was 94%.

Example 3

A contact lens obtained by polymerization and softened in the same manner as in Example 1 was immersed at room temperature for 30 minutes in a dyeing solution prepared by adding 10 g of water and 90 g of acetone to 1 g of C.I. Acid Blue 5 (C.I. No. 42052). After the immersion, the swollen and coloured soft contact lens was dried at 95°C for 16 hours and then washed with water to remove the dye attaching to its surface, to give a coloured contact lens.

Even when this coloured soft contact lens was boiled in distilled water for 7 days at atmospheric pressure, neither discolouration nor fading was observed.

When the coloured soft contact lens was applied to an eye and used for three months for 8 hours per day, substantially no discolouration or fading was observed, and the dye-retention, determined from the absorbance at 630 nm, was 95%.

Example 4

A mixture of 250 g of t-butyl acrylate, 250 g of butyl methacrylate, 25 g of ethylene glycol dimethacrylate and 8 mg of benzoin was subjected to polymerization in the same manner as in Example 1, and the resulting polymer was shaped into a contact lens by cutting. Subsequently, the lens thus obtained was immersed at room temperature for 30 seconds in a dyeing solution prepared by adding 15 g of water and 85 g of ethyl alcohol to 3 g of C.I. Acid Blue 9 (C.I. No. 42090). After the immersion, the resulting hard contact lens having a swollen and coloured thin service layer was dried at 40°C for 48 hours and then washed with water to remove the dye attaching to its surface, to give a coloured contact lens.

Even when this coloured hard contact lens was immersed in flowing water for 1 month, neither discolouration nor fading was observed.

When the coloured hard contact lens was applied to an eye and used for three months for 8 hours per day, substantially no discolouration or fading was observed, and the dye-retention, determined from the absorbance at 630 nm, was 96%.

Example 5

Into a lens mould having a diameter of 13 mm were poured 200 g of t-butyl acrylate, 300 g of butyl acrylate, 20 g of tetraethylene glycol diacrylate and 6 mg of benzoin, and the mixture was polymerized by irradiation with ultraviolet rays at room temperature, after which the resulting shaped article was taken out of the mould and ground to form a soft contact lens.

This soft contact lens was immersed at room temperature for one hour in a dyeing solution prepared by dissolving 1 g of C.I. Acid Blue 9 (C.I. No. 42090) in 100 g of methyl alcohol, after which the swollen and coloured contact lens was dried at 95°C for 16 hours, and thereafter well washed with water to remove the dye attaching to its surface, thus giving a coloured contact lens.

Even when this coloured soft contact lens was boiled in distilled water for 7 days at atmospheric pressure, neither discolouration nor fading was observed.

When the coloured soft contact lens was applied to an eye and used for three months for 8 hours per day, substantially no discolouration or fading was observed, and the dye-retention, determined from the absorbance at 630 nm, was 93%.

Example 6

The same procedure as in Example 3 was repeated, except that C.I. Basic Blue 1 (C.I. No. 42025) was substituted for the C.I. Acid Blue 5, to obtain a coloured soft contact lens.

Even when this coloured soft contact lens was boiled in distilled water for 7 days at atmospheric pressure, neither discolouration nor fading was observed.

When the coloured soft contact lens was applied to an eye and used for three months for 8 hours per day, substantially no discolouration or fading was observed, and the dye-retention, determined from the absorbance at 630 nm, was 90%.

Example 7

A contact lens obtained by polymerization and softened in the same manner as in Example 1 was immersed at room temperature for 30 minutes in a dyeing solution prepared by adding 100 g of ethyl alcohol to 1 g of C.I. Direct Brown 44 (C.I. No. 35010). After the immersion, the swollen and coloured soft contact lens was dried at 95°C for 16 hours and then washed with water to remove the dye attaching to its surface, to give a coloured contact lens.

Even when this coloured soft contact lens was boiled in distilled water for 7 days at atmospheric pressure, neither discolouration nor fading was observed.

When the coloured soft contact lens was applied to an eye and used for three months for 8 hours per day, substantially no discolouration or fading was observed, and the dye-retention, determined from the absorbance at 585 nm, was 89%.

Example 8

A contact lens obtained by polymerization and softened in the same manner as in Example 1 was immersed at room temperature for 30 minutes in a dyeing solution prepared by adding to 100 g of acetone 2 g of C.I. Vat Blue 18 and 5 g of an aqueous solution prepared from 100 g of water, 5 g of sodium hydroxide and 10 g of sodium hyposulphite. After the immersion, the swollen and coloured soft contact lens was dried at 90°C for 16 hours and then washed with water to remove the dye attaching to its surface, to give a coloured contact lens.

Even when this coloured soft contact lens was boiled in distilled water for 7 days at atmospheric pressure, neither discolouration nor fading was observed.

When the coloured soft contact lens was applied to an eye and used for three months for 8 hours per day, substantially no discolouration or fading was observed, and the dye-retention, determined from the absorbance at 480 nm, was 91%.

Comparative Example

A soft contact lens prepared by polymerization in the same manner as in Example 1 was immersed at room temperature for one hour in a dyeing solution prepared by adding 100 g of methyl alcohol to C.I. Solvent Blue 12 (C.I. No. 62100) whcih is an oil-soluble dye, after which the swollen and coloured soft contact lens was dried at 95°C for 16 hours. Thereafter, a neutral detergent was applied to the dried contact lens and the contact lens was well washed with water to remove the dye attaching to its surface, thereby obtaining a coloured contact lens.

When the coloured soft contact lens was applied to an eye and used for three months for 8 hours per day, the lens was substantially decolourized and the dye-retention, determined from the absorbance at 630 nm, was 17%.

**Claims**

1. A process for producing a coloured shaped article, by immersing a shaped article formed of a polymer in a solution of a dye, characterized in that an article made of a copolymer of at least one monomer which is an acrylate and/or methacrylate and at least one polyfunctional monomer which is a polyfunctional acrylate and/or methacrylate, the proportion of said polyfunctional monomer being from 0.1 to 50 mole% of the total of said acrylate, methacrylate and polyfunctional monomer, is immersed in a dyeing solution prepared by dissolving a water-soluble dye in a solvent capable of swelling said polymer or in a mixture of 100 parts by weight of said solvent and up to 20 parts by wbight of water, to swell and colour the shaped article, and then drying the swollen shaped article.

2. A process according to Claim 1, wherein the dye is a vat dye and the mixture comprises said solvent and an aqueous alkaline reducing solution.

3. A process according to Claim 1 or Claim 2, wherein the shaped article is a contact lens.

4. A process according to any one of Claims 1 to 3, wherein the monomer is methyl acrylate, ethyl acrylate, propyl acrylate, isopropyl acrylate, butyl acrylate, isobutyl acrylate, t-butyl acrylate, 2-ethylhexyl acrylate, octyl acrylate, methyl methacrylate, ethyl methacrylate, propyl methacrylate, isopropyl methacrylate, butyl methacrylate, isobytyl methacrylate, t-butyl methacrylate, 2-ethylhexyl methacrylate, hexyl methacrylate or octyl methacrylate.

5. A process according to any one of the preceding claims, wherein the polyfunctional monomer is ethylene glycol diacrylate, diethylene glycol diacrylate, triethylene glycol diacrylate, ethylene glycol dimethacrylate, diethylene glycol dimethacrylate, triethylene glycol dimethacrylate, trimethylolpropane trimethacrylate, allyl acrylate or a vinyl-substituted benzyl acrylate.

6. A process according to any one of the preceding claims, wherein the solvent is a lower alcohol, a ketone, a chlorinated hydrocarbon, an ether or an ester or a mixture of any two or more thereof.

7. A process according to Claim 6, wherein the solvent is methyl alcohol, ethyl alcohol, isopropyl alcohol, acetone, methyl ethyl ketone, dichloromethane, chloroform, diethyl ether, ethylene glycol monomethyl ether, ethylene glycol monobutyl ether, diethylene glycol monomethyl ether, ethyl acetate, methyl formate, ethyl formate or butyl formate or a mixture of any two or more thereof.

8. A process according to any one of the preceding claims, wherein the dye concentration in the dyeing solution is from 0.001 to 10% by weight.

9. A process according to any one of the preceding claims, wherein the immersion time is from 10 seconds to 2 hours.

10. A process according to any one of the preceding claims, wherein the dye is a direct dye, an acidic dye, a basic dye or a vat dye.

**Patentansprüche**

1. Verfahren zur Herstellung eines gefärbten Formkörpers durch Eintauchen eines Formkörpers aus einem Polymer in eine Farbstofflösung, gekennzeichnet durch Eintauchen eines Formkörpers aus einem Copolymer mindestens eines Monomers, wie eines Acrylats und/oder Methacrylats, und mindestens eines polyfunktionellen Monomers, wie eines polyfunktionellen Acrylats und/oder Methacrylats, in einer Menge von polyfunktionellem Monomer von 0,1 bis 50 Mol-%, bezogen auf die Gesamtmenge des Acrylats, Methacrylats und polyfunctionellen Monomers, in eine Färbelösung, hergestellt durch Lösen eines wasserlöslichen Farbstoffs in einem das Polymer quellenden Lösungsmittel oder in einem Gemisch von 100 Gewichtsteilen des Lösungsmittels und bis zu 20 Gewichtsteilen Wasser, um den Formkörper zu quellen und zu färben, und dann Trocknen des gequollenen Formkörpers.

2. Verfahren nach Anspruch 1, gekennzeichnet durch Verwendung eines Küpenfarbstoffes und eines Gemisches aus dem Lösungsmittel und einer wäßrigen alkalischen Reduktionslösung.

# 0 082 026

3. Verfahren nach Anspruch 1 oder 2 zur Herstellung einer Kontaktlinse als Formkörper.

4. Verfahren nach einem der Ansprüche 1 bis 3, gekennzeichnet durch Methylacrylat, Ethylacrylat, Propylacrylat, Isopropylacrylat, Butylacrylat, Isobutylacrylat, t-Butylacrylat, 2-Ethylhexylacrylat, Octylacrylat, Methylmethacrylat, Ethylmethacrylat, Propylmethacrylat, Isopropylmethacrylat, Butylmethacrylat, Isobutylmethacrylat, t-Butylmethacrylat, 2-Ethylhexylmethacrylat, Hexylmethacrylat oder Octylmethacrylat als Monomer.

5. Verfahren nach einem der vorstehenden Ansprüche, gekennzeichnet durch Verwendung von Ethylglykoldiacrylat, Diethyleneglykoldiacrylat, Triethylenglykoldiacrylat, Ethylenglykoldimethacrylat, Diethylenglykoldimethacrylat, Triethylenglykoldimethacrylat, Trimethylolpropan-trimethacrylat, Allylacrylat oder eines Vinyl-substituierten Benzylacrylats als polyfunktionelles Monomer.

6. Verfahren nach einem der vorstehenden Ansprüche, gekennzeichnet durch Verwendung eines niedrigen Alkohols, Ketons, chlorierten Kohlenwasserstoffs, Ethers oder Esters oder eines Gemisches von mindestens zwei dieser Verbindungen als Lösungsmittel.

7. Verfahren nach Anspruch 6, gekennzeichnet durch Verwendung von Methylalkohol, Ethylalkohol, Isopropylalkohol, Aceton, Methylethylketon, Dichloromethan, Chloroform, Diethylether, Ethylenglykolmonomethylether, Ethylenglykol-monobutylether, Diethylenglykol-monomethylether, Ethylacetat, Methylformiat, Ethylformiat oder Butylformiat oder eines Gemisches mindestens zwei dieser Verbindungen als Lösungsmittel.

8. Verfahren nach einem der vorstehenden Ansprüche, gekennzeichnet durch Verwendung des Farbstoffs in der Färbelösung in einer Konzentration von 0,001 bis 10 Gew.-%.

9. Verfahren nach einem der vorstehenden Ansprüche, gekennzeichnet durch Anwendung einer Eintauchzeit von 10 s bis 2 h.

10. Verfahren nach einem der vorstehenden Ansprüche, gekennzeichnet durch Verwendung eines direkten Farbstoffs, eines sauren Farbstoffs, eines basischen Farbstoffs oder eines Küpenfarbstoffs.

## Revendications

1. Procédé pour la fabrication d'un article façonné coloré, par immersion d'un article façonné, constitué d'un polymère, dans une solution d'un colorant, caractérisé en ce que l'on immerge un article, constitué d'un copolymère à base d'au moins un monomère, lequel est un acrylate et/ou un méthacrylate, et d'au moins un monomère polyfunctionnel, lequel est un acrylate et/ou un méthacrylate polyfonctionnel, la proportion dudit monomère polyfunctionnel représentant de 0,1 à 50% en mole de la somme desdits acrylate, méthacrylate et monomère polyfonctionnel, dans une solution tinctoriale préparée par dissolution d'un colorant, soluble dans l'eau, dans un solvant apte à faire gonfler ledit polymère, ou dans un mélange de 100 parties en poids dudit solvant et jusqu'à 20 parties en poids d'eau, pour faire gonfler et colorer l'article façonné, et on sèche ensuite l'article façonné gonflé.

2. Procédé selon la revendication 1, dans lequel le colorant est un colorant de cuve et le mélange comprend ledit solvant et une solution aqueuse alcaline réductrice.

3. Procédé selon la revendication 1 ou la revendication 2, dans lequel l'article façonné est une lentille de contact.

4. Procédé selon l'une quelconque des revendications 1 à 3, dans lequel le monomère est l'acrylate de méthyle, l'acrylate d'éthyle, l'acrylate de propyle, l'acrylate d'isopropyle, l'acrylate de butyl, l'acrylate d'isobutyle, l'acrylate de tert-butyle, l'acrylate de 2-éthylhexyle, l'acrylate d'octyle, le méthacrylate de méthyle, le méthacrylate d'éthyle, le méthacrylate de propyle, le méthacrylate d'isopropyle, le méthacrylate de butyle, le méthacrylate d'isobutyle, le méthacrylate de tert-butyle, le méthacrylate de 2-éthylhexyle, le méthacrylate d'hexyle ou le méthacrylate d'octyle.

5. Procédé selon l'une quelconque des revendications précédentes, dans lequel le monomère polyfonctionnel est le diacrylate d'éthylèneglycol, le diacrylate de diéthylèneglycol, le diacrylate de triéthylèneglycol, le diméthacrylate d'éthylèneglycol, le diméthacrylate de diéthylèneglycol, le diméthacrylate de triéthylèneglycol, le triméthacrylate de triméthylolpropane, l'acrylate d'allyle ou un acrylate de benzyl substitué par un groupe vinyle.

6. Procédé selon l'une quelconque des revendications précédentes, dans lequel le solvant est un alcool inférieur, une cétone, un hydrocarbure chloré, un éther ou un ester, ou un mélange de deux quelconques ou plus de ceux-ci.

7. Procédé selon la revendication 6, dans lequel le solvant est l'alcool méthylique, l'alcool éthylique, l'alcool isopropylique, l'acétone, la méthyléthylcétone, le dichlorométhane, le chloroforme, l'éther diéthylique, l'éther monométhylique d'éthylèneglycol, l'éther monobutylique d'éthylèneglycol, l'éther monométhylique de diéthylèneglycol, l'acétate d'éthyle, le formiate de méthyle, le formiate d'éthyle ou le formiate de butyle, ou un mélange de deux quelconques ou plus de ceux-ci.

8. Procédé selon l'une quelconque des revendications précédentes, dans lequel la concentration de colorant dans la solution tinctoriale va de 0,001 à 10% en poids.

9. Procédé selon l'une quelconque des revendications précédentes, dans lequel la durée d'immersion va de 10 secondes à 2 heures.

10. Procédé selon l'une quelconque des revendicatiocs précédentes, dans lequel le colorant est un colorant direct, un colorant acide, un colorant basique ou un colorant de cuve.